# EUROPÄISCHE PATENTSCHRIFT

(11) **EP 1 853 400 B1**
(45) Veröffentlichungstag und Bekanntmachung des Hinweises auf die Patenterteilung: **03.07.2019**
(21) Anmeldenummer: 05810719.4
(22) Anmeldetag: 10.11.2005
(51) Int. Cl.: B23B 31/02, B23Q 11/00

(54) **SCHWINGUNGSGEDÄMPFTER WERKZEUGHALTER**
VIBRATION-DAMPED TOOL HOLDER
PORTE-OUTIL A VIBRATIONS AMORTIES

(30) Priorität: 11.11.2004 DE 102004054550
(43) Veröffentlichungstag der Anmeldung: 14.11.2007
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Weickmann & Weickmann PartmbB
(86) Internationale Anmeldenummer: PCT/EP2005/012059
(87) Internationale Veröffentlichungsnummer: WO 2006/050952

(56) Entgegenhaltungen:
- EP-A- 0 015 248
- EP-A- 0 294 348
- EP-A- 1 004 378
- EP-A- 1 029 620
- EP-A- 1 308 229
- BE-A- 659 305
- DD-A1- 258 755
- DE-A1- 2 541 123
- DE-A1- 3 341 958
- DE-U1- 9 107 604
- PATENT ABSTRACTS OF JAPAN Bd. 2003, Nr. 02, 5. Februar 2003 (2003-02-05) -& JP 2002 301633 A (KYORITSU SEIKI KK), 15. Oktober 2002 (2002-10-15)
- SANDVIK COROMANT UK: "Metalworking Products Rotating Tools 2001" 2001, SANDVIK COROMANT UK , HALESOWEN, ENGLAND, UNITED KINGDOM , XP002368465 Seite E6 Seite E10 - Seite E11
- PATENT ABSTRACTS OF JAPAN Bd. 2003, Nr. 08, 6. August 2003 (2003-08-06) & JP 2003 117751 A (SEIWA SEIKI KK), 23. April 2003 (2003-04-23)
- PATENT ABSTRACTS OF JAPAN Bd. 2003, Nr. 12, 5. Dezember 2003 (2003-12-05) -& JP 2004 249441 A (TOTTORI UNIV; SEIWA SEIKI KK), 9. September 2004 (2004-09-09)
- SANDVIK COROMANT: "Metalworking Products Turning Tools 2000" 2000, SANVIK COROMANT UK , HALESOWEN, ENGLAND, UNITED KINGDOM , XP002368466 Seite D7

## Beschreibung

Die vorliegende Erfindung betrifft einen Werkzeughalter gemäß dem Oberbegriff des Anspruchs 1.

Derartige Werkzeughalter sind allgemein bekannt und in weiter Verbreitung im Einsatz. Bei den bekannten Werkzeughaltern sind in der Regel das WZM-Kopplungsteil und das Werkzeugspannteil des Werkzeughalters stoffschlüssig, gegebenenfalls unter Zwischenanordnung eines Schaftteils, miteinander verbunden, in der Regel verschweißt. Die bekannten Werkzeughalter dienen in der Regel zu Kopplung eines spanabhebenden rotierenden Werkzeugs mit der Spindel einer Werkzeugmaschine, wie es etwa beim Fräsen oder beim Bohren der Fall ist. In der vorliegenden Anmeldung bezeichnet die Abkürzung WZM, wie unter Fachleuten üblich, allgemein eine Werkzeugmaschine.

Die DE 91 07 604 U offenbart einen Werkzeughalter gemäß dem Oberbegriff des Anspruchs 1.

Zur Erzielung eines möglichst genauen Bearbeitungsergebnisses an einem von dem rotierenden Werkzeug bearbeiteten Werkstück ist das Eigenschwingverhalten des Werkzeughalters von großer Wichtigkeit. Dabei spielen sowohl Torsionsschwingen, d.h. Schwingungen um die Werkzeughalterachse, als auch Biegeschwingungen, d.h. Schwingungen um eine zur Werkzeughalterachse orthogonale Achse, und Kontraktionsschwingungen, d.h. Schwingungen in Richtung der Werkzeughalterachse, eine Rolle.

Die Schwingungen werden in der Regel durch den Spanvorgang selbst angeregt, zum Beispiel dann, wenn bei vorbestimmter Werkzeugdrehzahl und vorbestimmtem Werkzeugvorschub periodisch eine Werkzeugschneide in Eingriff mit dem Werkstück gelangt. Hierdurch wirken periodisch Schneidreaktionskräfte auf das Werkzeug und damit auf den es tragenden Werkzeughalter zurück.

Aufgabe der vorliegenden Erfindung ist es daher, einen Werkzeughalter der eingangs genannten Art anzugeben, welcher möglichst schwingungsresistent ist.

Diese Aufgabe wird durch einen Werkzeughalter gemäß Anspruch 1 der vorliegenden Erfindung gelöst.

Durch die längs der Berührfläche aneinander anliegende Anlagefläche und Gegenanlagefläche, ist eine Schwingungsdämpfung im Werkzeughalter nachweisbar.

Die Übertragbarkeit von Kraft in axialer Richtung zwischen Anlagefläche und zugeordneter Gegenanlagefläche dient der Möglichkeit, die gesonderten Teile des Werkzeughalters gefügt zu halten und gegebenenfalls den Werkzeughalter axial vorzuspannen. Letzteres beeinflusst ebenfalls das Eigenschwingverhalten des Werkzeughalters. Die Übertragbarkeit von Kraft in radialer Richtung bezüglich der Werkzeughalterachse dient unter anderem dazu, ohne weitere konstruktive Vorkehrungen durch Reibschluss Kraft in axialer Richtung zwischen WZM-Kopplungsteil und Werkzeugspannteil übertragen zu können. Auch die Kraftübertragung in radialer Richtung bietet die Möglichkeit, den Werkzeughalter zumindest abschnittsweise auch in radialer Richtung vorzuspannen, so dass durch Vorspannung die am Werkzeughalter anregbaren Eigenschwingfrequenzen in geeigneter Weise zu schwer anregbaren Frequenzbereichen verschoben werden können.

Die an der Berührfläche zwischen Anlagefläche und der ihr zugeordneten Gegenanlagefläche erzielte schwingungsdämpfende Wirkung ist in ihrer Ursache bisher nicht vollständig geklärt, jedoch experimentell ohne Weiteres nachweisbar. Eine mögliche Theorie geht davon aus, dass es zwischen Anlagefläche und Gegenanlagefläche zu Mikrobewegungen kommt, durch welche Anregungsenergie dissipiert wird und somit ein geringerer Energieanteil zur Anregung von unerwünschten Schwingungen am Werkzeughalter zur Verfügung steht.

Gemäß einer ersten Ausführungsform der vorliegenden Erfindung kann die werkzeugseitige Anlagefläche die Gegenanlagefläche der werkzeugmaschinenseitigen Anlagefläche sein und umgekehrt. Dadurch wird ein Werkzeughalter mit einer insgesamt geringen Bauteileanzahl und dadurch geringem Fertigungsaufwand bereitgestellt.

Versuche haben jedoch gezeigt, dass die Schwingungsdämpfungseigenschaften eines Werkzeughalters mit der Anzahl von zwischen Anlageflächen und Gegenanlageflächen erzeugten Berührflächen steigt, so dass es bevorzugt ist, dass der Werkzeughalter wenigstens zwei in radialer oder/und in axialer Richtung voneinander mit Abstand vorgesehene Berührflächen aufweist.

Die wenigstens zwei Berührflächen können konstruktiv in einfacher Weise dadurch vorgesehen sein, dass der Werkzeughalter wenigstens ein gesondertes radial oder/und axial zwischen dem WZM-Kopplungsteil und dem Werkzeugspannteil angeordnetes Zwischenteil umfasst, an welchem eine werkzeugmaschinenseitige und eine werkzeugseitige Zwischenanlagefläche zur Anlage an einer jeweils zugeordneten Gegenanlagefläche vorgesehen sind.

Eine noch höhere Anzahl von in radialer oder/und in axialer Richtung mit Abstand voneinander vorgesehenen Berührflächen zwischen einer Anlagefläche und einer an dieser anliegenden Gegenanlagefläche kann dann erhalten werden, wenn der Werkzeughalter eine Mehrzahl von gesonderten radial oder/und axial zwischen dem WZM-Kopplungsteil und dem Werkzeugspannteil angeordneten Zwischenteilen mit je einer werkzeugmaschinenseitigen und einer werkzeugseitigen Zwischenanlagefläche zur Anlage an zugeordneten Gegenanlageflächen umfasst. Wie oben bereits erwähnt, wird durch Erhöhung der Anzahl an Berührflächen die Schwingungsdämpfungseigenschaft des Werkzeughalters verbessert.

Je nach Anzahl von zwischen dem WZM-Kopplungsteil und dem Werkzeugspannteil vorgesehenen Zwischenteilen kann die Gegenanlagefläche einer Zwischenanlagefläche eines Zwischenteils die werkzeugmaschinenseitige Anlagefläche des WZM-Kopplungsteils oder die werkzeugseitige Anlagefläche des Werkzeugspannteils oder, wenn mehr als ein Zwischenteil vorgesehen ist, eine Zwischenanlagefläche eines weiteren Zwischenteils sein. Die Zwischenanlageflächen sind daher Gegenanlageflächen bzw. weitere Anlageflächen im Sinne des Hauptanspruchs.

Eine vorteilhafte Ausführungsform eines Werkzeughalters, bei welchem keine zusätzlichen Verbindungsmittel zur Verbindung von WZM-Kopplungsteil und Werkzeugspannteil, gegebenenfalls unter Zwischenanordnung wenigstens eines Zwischenteils, erforderlich sind, wird vorteilhafterweise erzielt, wenn wenigstens eine der Anlageflächen und die dieser zugeordnete Gegenanlagefläche selbsthemmend ausgebildet sind, so dass das die jeweilige Anlagefläche tragende Teil des Werkzeughalters: WZM-Kopplungsteil, Werkzeugspannteil oder Zwischenteil, und das die zugeordnete Gegenanlagefläche tragende Teil des Werkzeughalters: WZM-Kopplungsteil, Werkzeugspannteil oder Zwischenteil, nach Ausübung der axialen Fügekraft kraftschlüssig zur Bildung des Werkzeughalters verbunden sind.

Mit "kraftschlüssig" ist dabei jede Art von Kraft bezeichnet, insbesondere auch zwischen den genannten Teilen des Werkzeughalters wirkende Reibkraft.

Eine konstruktiv einfache und daher kostengünstig zu verwirklichende Möglichkeit, zwischen einer Anlagefläche und einer ihr zugeordneten Gegenanlagefläche eine Kraft sowohl in radialer Richtung wie auch in axialer Richtung zu übertragen, kann man dadurch erhalten, dass wenigstens eine der Anlageflächen und die ihr zugeordnete Gegenanlagefläche in axialer Richtung zumindest abschnittsweise verjüngend ausgebildet sind. Bevorzugt sind Anlagefläche und Gegenanlagefläche konisch verjüngend ausgebildet, da eine derartige Verjüngung rotationssymmetrisch ist, vor allem rotationssymmetrisch bezüglich der Werkzeughalterachse als Rotationssymmetrieachse, was die Möglichkeit von Mikrorelativbewegungen zwischen Anlagefläche und Gegenanlagefläche gemäß der oben angedeuteten Theorie erleichtert.

Überdies wird die Montage der einzelnen Werkzeughalterteile durch rotationssymmetrische sich in axialer Richtung konisch verjüngende Anlageflächen und Gegenanlageflächen erleichtert. Schließlich weisen sich in axialer Richtung zumindest abschnittsweise verjüngende Anlageflächen und Gegenanlageflächen eine Zentrierwirkung auf, so dass sichergestellt werden kann, dass Bezugsachsen des WZM-Kopplungsteils und des Werkzeugspannteils zumindest näherungsweise fluchten, so dass der Nachbearbeitungsaufwand zur Bildung einer gemeinsamen Werkzeughalterachse gering gehalten werden kann.

Zusätzlich oder alternativ zu einer sich verjüngenden Anlagefläche und einer zugeordneten sich verjüngenden Gegenanlagefläche kann die Übertragung einer Kraft in radialer Richtung zwischen Anlagefläche und Gegenanlagefläche auch dadurch erreicht werden, dass eine der Flächen: Anlagefläche und zugeordnete Gegenanlagefläche, die jeweils andere umgibt, wobei, bezogen auf eine Axialposition in einem am montierten Werkzeughalter gemeinsamen Axialabschnitt der beiden Flächen, eine zur Werkzeughalterachse orthogonale Außenabmessung der umgebenen Fläche im unmontierten Zustand ein Übermaß bezüglich einer zur Werkzeughalterachse orthogonalen Innenabmessung der umgebenden Fläche aufweist. In einem solchen Falle kann die in radialer Richtung wirkende Kraft im Wesentlichen unabhängig von der axialen Fügekraft erzeugt werden, welche zur Herstellung des Werkzeughalters auf die einzelnen Werkzeughalterteile ausgeübt wird. Das Übermaß ist auf einen gleich temperierten Zustand der beiden zugeordneten Flächen bezogen.

Im letztgenannten Fall können die die Anlagefläche und die zugeordnete Gegenanlagefläche tragenden Teile des Werkzeughalters entweder mit hoher axialer Fügekraft zur Überwindung des Übermaßes zusammengepresst werden, oder es kann zur Verringerung der notwendigen Fügekraft ein Teil erwärmt oder/und das andere Teil abgekühlt werden, so dass das Übermaß durch thermische Dehnung zunächst für den Fügevorgang verringert wird und sich nach einer Abkühlung der so gefügten Werkzeughalterteile auf eine gemeinsame Temperatur eine hohe Radialkraft ergibt, die über die Berührfläche hinweg wirkt. Durch das Übermaß können wenigstens eine Anlagefläche und die ihr zugeordnete Gegenanlagefläche zumindest abschnittsweise im Wesentlichen zylindrische Flächen sein, wobei die Werkzeughalterachse im Wesentlichen die gemeinsame Zylinderachse beider Flächen ist. Zylindrische Flächen sind einfach herzustellen und in der Qualitätsüberwachung besonders einfach zu überprüfen.

Unabhängig davon, ob die Anlagefläche und eine ihr zugeordnete Gegenanlagefläche zumindest abschnittsweise sich in axialer Richtung verjüngt oder/und zylindrisch ist, können Teile des schwingungsgedämpften Werkzeughalters ohne weitere Hilfsmittel sicher miteinander verbunden sein, wenn diese in der zwischen ihnen liegenden Berührfläche mit Presssitz verbunden sind. Vorzugsweise sind alle Teile des Werkzeughalters, d.h. der WZM-Kopplungsteil, der Werkzeugspannteil und alle Zwischenteile mit ihrem axial benachbarten Teil mit Presssitz verbunden.

Zur Erhöhung der Arbeitssicherheit kann der Werkzeughalter mit Lösesicherungsmitteln versehen sein, welche ein Lösen von wenigstens zwei, vorzugsweise von allen oder/und axial benachbarten Teilen des Werkzeughalters verhindern. Ein formschlüssiges Lösesicherungsmittel kann dabei eine den Werkzeughalter in axialer Richtung durchsetzende Schraube sein, welche eine Trennung von Teilen des Werkzeughalters, d.h. WZM-Kopplungsteil, Werkzeugspannteil oder Zwischenteile, verhindert. Zusätzlich oder alternativ können radial oder/und axial benachbarte Teile des Werkzeughalters miteinander verklebt, verlötet, verschweißt oder allgemein stoffschlüssig gegen Lösen gesichert sein, vorzugsweise durch eine um die Werkzeughalterachse umlaufende Verbindungsstelle.

Bei Kraft-gesteuertem Fügevorgang zur Herstellung des Werkzeughalters kann ein Werkzeughalter definierter Länge in einfacher Weise dadurch erhalten werden, dass wenigstens zwei, vorzugsweise alle radial oder/und axial benachbarte Teile des Werkzeughalters Axialanschlagsmittel aufweisen, welche einen axialen Fügeweg der axial benachbarten Teile begrenzen. In diesem Falle ist es nämlich möglich, zwei mit Axialanschlagsmitteln versehene axial benachbarte Teile des Werkzeughalters nur solange zu fügen, bis die Axialanschlagsmittel aneinander anliegen.

Konstruktiv sehr einfach und damit kostengünstig herstellbare Axialanschlagsmittel umfassen eine um die Werkzeughalterachse umlaufende Anschlagsfläche eines ersten Teils und eine um die Werkzeughalterachse umlaufende Gegenanschlagsfläche eines zum ersten Teil radial oder/und axial benachbarten zweiten Teils des Werkzeughalters. Vorzugsweise sind Anschlagsfläche und Gegenschlagsfläche orthogonal zur Werkzeughalterachse orientiert, so dass zwischen ihnen, abgesehen von vernachlässigbaren Reibungseinflüssen, ausschließlich Axialkräfte übertragbar sind, diese dafür mit einem sehr hohen Betrag. Dadurch können sehr hohe Fügekräfte an der Anschlagsfläche und an der Gegenanschlagsfläche aufgenommen werden.

Versuche haben gezeigt, dass die Werkstoffauswahl einen Einfluss auf das Schwingungsverhalten des Werkzeughalters hat. Zwar kann grundsätzlich daran gedacht sein, das WZM-Kopplungsteil und das Werkzeugspannteil aus unterschiedlichen Werkstoffen herzustellen. Jedoch dient das eine Teil zur Kopplung des Werkzeughalters mit der Werkzeugmaschine und das andere zur sicheren Aufnahme eines Werkzeugschaftes, so dass es bei diesen Teilen auf hohe Festigkeit ankommt. Aus diesem Grunde sind diese Teile in der Regel aus Stahl gefertigt. Es kann jedoch in einer vorteilhaften Weiterbildung der vorliegenden Erfindung wenigstens ein Zwischenteil aus einem anderen Werkstoff gebildet sein als das WZM-Kopplungsteil oder das Werkzeugspannteil. Beispielsweise kann das Zwischenteil aus einer Keramik oder aus Kunststoff, Gummi, Hartmetall, Aluminium, Schwermetall, Verbundwerkstoff oder Sintermaterial gefertigt sein, so dass, je nach gewähltem Werkstoff, Eigenschaften des Zwischenteils, wie Härte, Formstabilität, Duktilität einstellbar sind.

Besonders vorteilhaft ist dabei, wenn bei einem Werkzeughalter mit einer Mehrzahl von Zwischenteilen wenigstens zwei, vorzugweise mehr als zwei, besonders bevorzugt alle Zwischenteile aus jeweils einem anderen Werkstoff gebildet sind. Dann ist an jeder Berührfläche eine andere Werkzeugpaarung in Anlageeingriff, so dass etwa an verschiedenen Berührflächen verschiedene Eigenschwingungsfrequenzen abgedämpft werden können. Insgesamt führt dies zu einem Werkzeughalter, welcher Schwingungsfrequenzen über einen weiten Frequenzbereich hinweg dämpfen kann. Die Zwischenteile können aus unterschiedlichen Metallen oder/und unterschiedlichen keramischen Werkstoffen hergestellt sein.

Zusätzlich oder alternativ zu den unterschiedlichen Werkstoffen, die für wenigstens zwei, mehr als zwei oder vorzugsweise alle Zwischenteile verwendet werden können, können zur Schwingungsdämpfung in einem möglichst breiten Frequenzbereich wenigstens zwei mit radialem oder/und mit axialem Abstand voneinander gebildete Beführflächen in axialer Richtung zumindest abschnittsweise verjüngend ausgebildet sind, wobei die Verjüngungsabschnitte der zwei Berührflächen unterschiedliche Verjüngungswinkel aufweisen. Wie oben bereits im Zusammenhang mit den unterschiedlichen Werkstoffen gesagt wurde, sind vorzugsweise mehr als zwei mit radialem oder/und mit axialem Abstand voneinander gebildete Berührflächen, besonders bevorzugt alle Berührflächen mit unterschiedlichen Verjüngungswinkeln ausgebildet.

Die unterschiedlichen Verjüngungswinkel führen zu unterschiedlichen zwischen Anlagefläche und Gegenanlagefläche der jeweiligen Berührfläche übertragenen Radialkräften bei gleicher aufgebrachter axialer Fügekraft, so dass etwa Mikrobewegungen zwischen einer Anlagefläche und einer ihr zugeordneten Gegenanlagefläche bei unterschiedlichen Verjüngungswinkeln durch unterschiedliche Frequenzen hervorgerufen werden können, so dass im Ergebnis wiederum Schwingungen in einem breiten Frequenzbereich abgedämpft werden können.

Da mit zunehmendem Verjüngungswinkel, bei konischen Anlageflächen und Gegenanlageflächen mit größer werdendem Kegelöffnungswinkel, eine Selbsthemmung zwischen dem die Anlagefläche und die zugeordnete Gegenanlagefläche tragenden Teil zunehmend erschwert wird, die axial aufbringbare Fügekraft jedoch begrenzt ist, ist es zur Sicherung des Werkzeughalters vorteilhaft, wenn der Verjüngungswinkel von mit radialem oder/und axialem Abstand voneinander gebildeten Berührflächen vom Werkzeugspannteil zum WZM-Kopplungsteil hin größer wird. In diesem Falle liegen die Anlageflächen und Gegenanlageflächen mit größerem Verjüngungswinkel näher beim WZM-Kopplungsteil, so dass diese in einfacher Weise vom WZM-Kopplungsteil aus mit Sicherungsmittel an diesem gehalten werden können. Da das WZM-Kopplungsteil in der Regel einen größeren Durchmesser aufweist als das Werkzeugspannteil und darüber hinaus kein Werkzeug aufnehmen muss, ist die Anbringung von Sicherungsmitteln am WZM-Kopplungsteil einfacher als am Werkzeugspannteil und daher bevorzugt.

Zusätzlich oder alternativ zu den oben genannten unterschiedlichen Werkstoffen und unterschiedlichen Verjüngungswinkeln kann eine Schwingungsdämpfung in einem breiten Frequenzspektrum dadurch erreicht werden, dass wenigstens zwei mit radialem oder/und axialem Abstand zueinander vorgesehene Anlageflächen oder/und ihre zugeordneten Gegenanlageflächen unterschiedliche Oberflächenrauhigkeiten aufweisen. Es gilt das oben im Zusammenhang mit den unterschiedlichen Werkstoffen und den unterschiedlichen Öffnungswinkeln Gesagte für die unterschiedlichen Oberflächenrauhigkeiten entsprechend. Daher sind vorzugsweise mehr als zwei mit axialem Abstand zueinander vorgesehene Anlageflächen oder/und ihre zugeordneten Gegenanlageflächen, besonders bevorzugt alle Anlageflächen oder/und ihre zugeordneten Gegenanlageflächen mit unterschiedlichen Oberflächenrauhigkeiten versehen.

Eine konkrete Einstellung des Schwingungsdämpfungsverhaltens des Werkzeughalters auf einen gewünschten Frequenzbereich kann auch dadurch erhalten werden, dass wenigstens eine Anlagefläche oder/und eine ihr zugeordnete Gegenanlagefläche mit einer Oberflächenbeschichtung versehen ist. Weiterhin können entsprechend dem oben in Bezug auf die unterschiedlichen Werkstoffe, die unterschiedlichen Öffnungswinkel und die unterschiedlichen Oberflächenrauhigkeiten Gesagten, worauf hier ausdrücklich Bezug genommen wird, gemäß einer Weiterbildung der Erfindung wenigstens zwei radial oder/und axial mit Abstand voneinander vorgesehene Anlageflächen oder/und ihre zugeordneten Gegenanlageflächen, vorzugsweise mehr als zwei, besonders bevorzugt alle Anlageflächen oder/und Gegenanlageflächen mit einer Oberflächenbeschichtung versehen sein. Schließlich können mehrere, vorzugsweise alle Anlageflächen oder/und Gegenanlageflächen mit unterschiedlichen Oberflächenbeschichtungen versehen sein, um ein gutes Schwingungsdämpfungsverhalten in einem breiten Frequenzbereich zu erhalten.

Ähnliche Wirkungen wie mit einer Oberflächenbeschichtung kann mit einer zwischen Anlagefläche und einer dieser zugeordneten Gegenanlagefläche vorgesehenen Zwischenlage erreicht werden. Die Oberflächenbeschichtung oder die Zwischenlage können beispielsweise Titannitrat, Gummi, Carbon-Nanotubes, Kunststoff, Teflon und dergleichen umfassen.

Zur erleichterten Montage kann eine Mehrzahl von Zwischenteilen im Wesentlichen starr miteinander zu einem Zwischenteil-Paket verbunden sein. In diesem Fall kann einfach das Zwischenteil-Paket als vormontiertes Bauteil mit dem WZM-Kopplungsteil und dem Werkzeugspannteil verbunden werden. Vorzugsweise sind die zu einem Zwischenteil-Paket zusammengefassten Zwischenteile an wenigstens einem Längsende, zum besseren Halt besonders bevorzugt an beiden Längsenden verbunden, etwa stoffschlüssig verbunden, insbesondere durch Schweißen. Zwischen den Verbindungsstellen verbleibt dann eine Berührfläche, welche weiterhin zur Schwingungsdämpfung beiträgt.

Die vorliegende Erfindung wird im Folgenden anhand der beiliegenden Figuren näher erläutert werden. Es stellt dar:
Fig. 1 eine erste Ausführungsform eines erfindungsgemäßen Werkzeughalters mit einer Anlagefläche und einer Gegenanlagefläche,
Fig. 2 eine zweite Ausführungsform eines erfindungsgemäßen Werkzeughalters,
Fig. 3 eine dritte Ausführungsform eines erfindungsgemäßen Werkzeughalters mit Zwischenteilen,
Fig. 4 eine vierte, nicht erfindungsgemäße Ausführungsform eines Werkzeughalters mit Anlageflächen und Gegenanlageflächen unterschiedlicher Verjüngungswinkel,
Fig. 5 eine fünfte Ausführungsform eines erfindungsgemäßen Werkzeughalters mit Zwischenteilen aus unterschiedlichen Werkstoffen,
Fig. 6 eine sechste Ausführungsform eines erfindungsgemäßen Werkzeughalters mit einer Vielzahl von Zwischenteilen ohne Axialanschlagsmittel,
Fig. 7 eine siebte Ausführungsform eines erfindungsgemäßen Werkzeughalters, welche der sechsten Ausführungsform ähnlich ist,
Fig. 8 eine achte Ausführungsform eines erfindungsgemäßen Werkzeughalters mit im Wesentlichen zylindrischen Anlage- und Gegenanlageflächen und mit Axialanschlagsmitteln,
Fig. 9 eine neunte Ausführungsform eines erfindungsgemäßen Werkzeughalters mit zylindrischen Anlage- und Gegenanlageflächen, und
Fig. 10 eine zehnte Ausführungsform eines erfindungsgemäßen Werkzeughalters mit einem Zwischenteil-Paket.

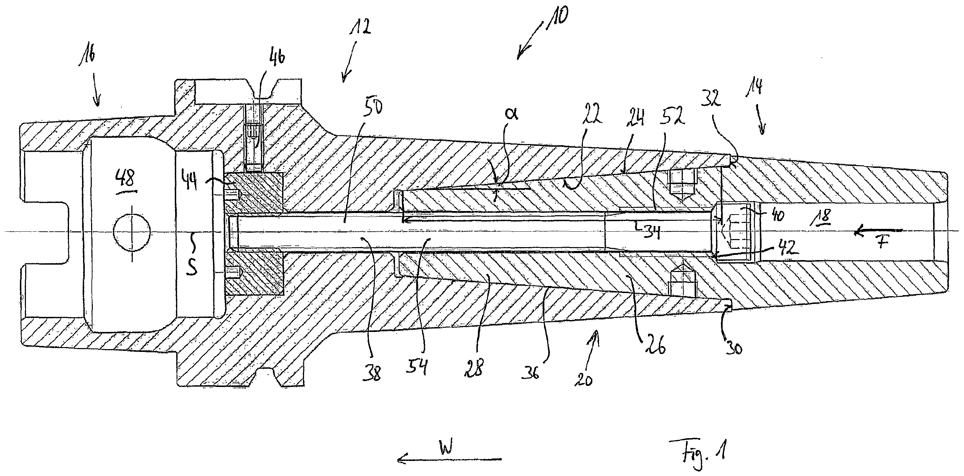

In Fig. 1 ist eine im Querschnitt dargestellte Ausführungsform eines erfindungsgemäßen Werkzeughalters allgemein mit 10 bezeichnet. Der Werkzeughalter 10 umfasst ein zur Kopplung mit einer nicht dargestellten Werkzeugmaschine ausgebildetes WZM-Kopplungsteil 12 und ein gesondert davon ausgebildetes Werkzeugspannteil 14, welches zur Aufnahme eines Schafts eines nicht dargestellten Werkzeugs ausgebildet ist.

Das WZM-Kopplungsteil 12 weist zur Kopplung mit der Werkzeugmaschine einen Spannkegel 16 der HSK-Bauart auf. Dieser ist nur als Beispiel gewählt, statt dessen könnte etwa auch ein Spannkegel der SK-Bauart vorgesehen sein.

Der Werkzeughalter 10 ist im Wesentlichen rotationssymmetrisch bezüglich einer Symmetrieachse S, welche die Mittelachse des Werkzeughalters 12 ist. In einem mit einer Werkzeugmaschine gekoppelten Zustand des Werkzeughalters ist die Symmetrieachse S idealerweise kollinear zu einer Spindeldrehachse der Werkzeugmaschine.

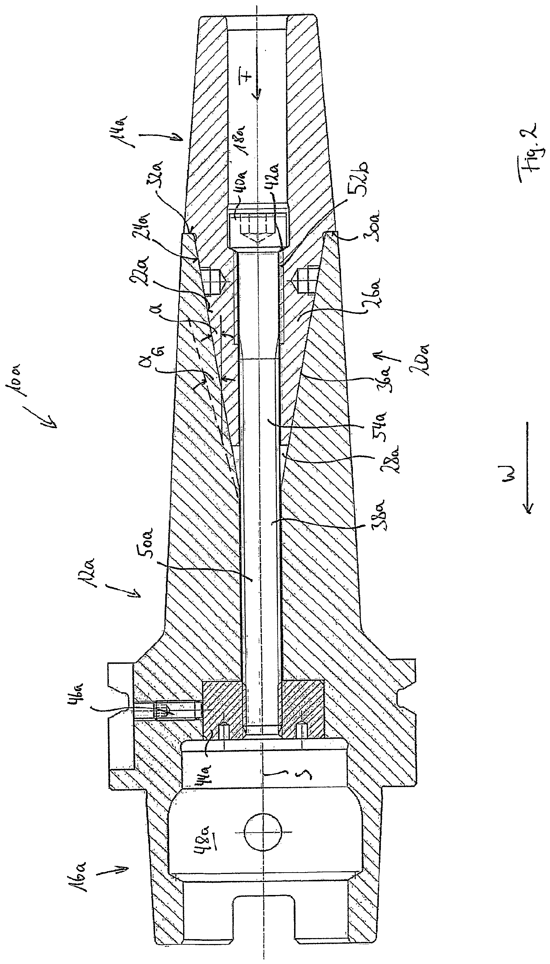

Das Werkzeugspannteil 14 weist einen Schaftaufnahmeraum 18 auf, in welchen ein nicht dargestellter Schaft eines ebenfalls nicht dargestellten Werkzeugs aufgenommen werden kann. In dem in Fig. 1 sowie in den weiteren in den Fig. 2 bis 10 gewählten Beispielen handelt es sich um eine Schrumpfspannvorrichtung, bei welcher das Werkzeugspannteil 14 in der Umgebung des Schaftaufnahmeraums 18 erwärmt wird, so dass sich der Innendurchmesser des Schaftaufnahmeraums 18 soweit erweitert, dass ein Werkzeugschaft problemlos in diesen einführbar ist. Statt eines Schrumpffutters kann an dem Werkzeugspannteil 14 auch ein Spannfutter mit verstellbaren Spannbacken vorgesehen sein.

An dem WZM-Kopplungsteil ist an dem werkzeugseitigen Längsende 20 eine konische werkzeugmaschinenseitige Anlagefläche 22 ausgebildet. Diese werkzeugmaschinenseitige Anlagefläche 22 verjüngt sich längs der Achse S in Richtung des Pfeils W, d.h. zum WZM-Spannabschnitt 16 hin. Der Kegelöffnungswinkel α der werkzeugmaschinenseitigen Anlagefläche 22 ist dabei derart gewählt, dass eine sich ebenfalls in Richtung des Pfeils W mit demselben Winkel α verjüngende werkzeugseitige Anlagefläche 24 selbsthemmend an der werkzeugmaschinenseitigen Anlagefläche 22 zur Anlage gelangt. Dies bedeutet, dass das Werkzeugspannteil 14, wenn es mit einer längs der Symmetrieachse S in Richtung des Pfeils W wirkenden Fügekraft F mit dem WZM-Kopplungsteil 12 verbunden wird, ohne Weiteres an diesem verbleibt, da die zwischen den aneinander anliegenden Flächen 22 und 24 wirkende Reibkraft größer ist als die Gewichtskraft des Werkzeugspannteils 14.

In dem in Fig. 1 gezeigten Beispiel bildet die werkzeugmaschinenseitige Anlagefläche 22 eine Gegenanlagefläche für die werkzeugseitige Anlagefläche 24 und umgekehrt.

Die werkzeugseitige konvexe Anlagefläche 24 ist an einem Verbindungsdorn 26 des Werkzeugspannteils 14 ausgebildet, welcher in ein von der werkzeugmaschinenseitigen konkaven Anlagefläche 22 bezüglich der Symmetrieachse S nach radial außen begrenztes Verbindungsmaul 28 des WZM-Kopplungsteils eingeschoben wird.

Der Fügeweg in Richtung des Pfeils F des Werkzeugspannteils 14 ist durch Axialanschlagsmittel begrenzt. Diese Axialanschlagsmittel sind gebildet durch eine zur Symmetrieachse S im Wesentlichen orthogonale um die Symmetrieachse S umlaufende Axialanschlagsfläche 30 am Werkzeugspannteil 14, welche im montierten Zustand des Werkzeughalters 10 an einer ebenfalls zur Symmetrieachse S im Wesentlichen orthogonalen um die Symmetrieachse S umlaufenden Axialgegenanschlagsfläche 32 des WZM-Kopplungsteils 12 anliegt.

Die Axialanschlagsfläche 30 und die Axialgegenanschlagsfläche 32 müssen nicht notwendigerweise orthogonal zur Symmetrieachse S sein. Jedoch ist eine orthogonale Ausrichtung der beiden Flächen 30 und 32 zur Symmetrieachse S und damit zur Wirkungsrichtung der Fügekraft F bevorzugt, da dann von den Axialanschlagsflächen keine Radialkräfte übertragen werden und somit eine möglichst große Axialkraft abstützbar ist. Es ist dabei vorteilhaft, wenn sie im Wesentlichen zueinander parallel sind, so dass sie flächig aneinander anliegen können, um eine zu große Flächenpressung zu vermeiden.

Zur Erzielung eines besonders sicheren Halts des Werkzeugspannteils 14 am WZM-Kopplungsteil 12 durch Presssitz ist der Verbindungsdorn 26 bezüglich des Verbindungsmauls 28 mit Übermaß gefertigt. Dies bedeutet, an einer beliebigen Stelle längs des axialen Überlapplungsbereichs 34 - das ist der Axialbereich, in welchem die konischen Flächen 22 und 24 flächig aneinander anliegen - ist ein Durchmesser des Verbindungsdorns 26 im nicht verbundenen Zustand von Werkzeugspannteil 14 und WZM-Kopplungsteil 12 größer als der Durchmesser des Verbindungsmauls 28 an dieser Stelle.

Die einander flächig berührenden Anlageflächen 22 und 24 definieren zwischen sich eine Berührfläche 36.

Das in Fig. 1 gezeigte Beispiel ist lediglich eine Versuchsanordnung für einen Werkzeughalter, bei welchem das WZM-Kopplungsteil 12 und das Werkzeugspannteil 14 durch eine Schraube 38 gegen eine Trennung in axialer Richtung der Symmetrieachse S gesichert sind. Der Schraubenkopf 40 liegt an einer Sicherungsanlagefläche 42 des Werkzeugspannteils 14 an. Das dem Schraubenkopf 40 entgegengesetzte Längsende der Schraube 38 ist in eine Mutter 44 eingedreht, welche durch eine Madenschraube 46 am WZM-Kopplungsteil 12 gegen Verlieren gesichert ist.

In einem industriellen Anwendungsfall würde vorteilhafterweise eine Sicherungsschraube von der werkzeugmaschinenseitigen Öffnung 48 des WZM-Kopplungsabschnitts 16 her in die Durchgangsöffnung 50 des WZM-Kopplungsteils 12 eingeführt und mit dem werkzeugmaschinennäheren Längsende des Verbindungsdorns 26 in Schraubeingriff gebracht werden. Ein Innengewinde 52 an einer Durchgangsöffnung 54 des Verbindungsdorns 26 an dessen werkzeugnäheren Längsende dient zur Anbringung eines Anschlags zur Begrenzung der Eindringtiefe eines Werkzeugschafts in den Schaftaufnahmeraum 18.

In Fig. 2 ist eine zweite Ausführungsform eines erfindungsgemäßen Werkzeughalters dargestellt. Gleiche Bauteile oder Bauteilabschnitte wie in Fig. 1 sind mit gleichen Bezugszeichen versehen, jedoch unter Beifügung des Kleinbuchstabens a. Zu deren Beschreibung wird ausdrücklich auf die Ausführungen im Zusammenhang mit Fig. 1 hingewiesen.

Die Ausführungsform von Fig. 2 unterscheidet sich von der in Fig. 1 dargestellen im Wesentlichen ausschließlich durch den größeren Verjüngungswinkel α der werkzeugmaschinenseitigen Anlagefläche 22a und der werkzeugseitigen Anlagefläche 24a.

Aufgrund der bekannten Materialpaarungen der Teile des Werkzeughalters 10: WZM-Kopplungsteil 12 und Werkzeugspannteil 14, kann anhand an sich bekannter Reibverhältnisse ein Grenzverjüngungswinkel α_{G} berechnet werden, bei welchem gerade noch eine selbsthemmende Verbindung von WZM-Kopptungsteit 12 und Werkzeugspannteil 14 möglich ist. Bevorzugt ist der tatsächliche Öffnungswinkel α kleiner gewählt als der Grenzöffnungswinkel α_{G}.

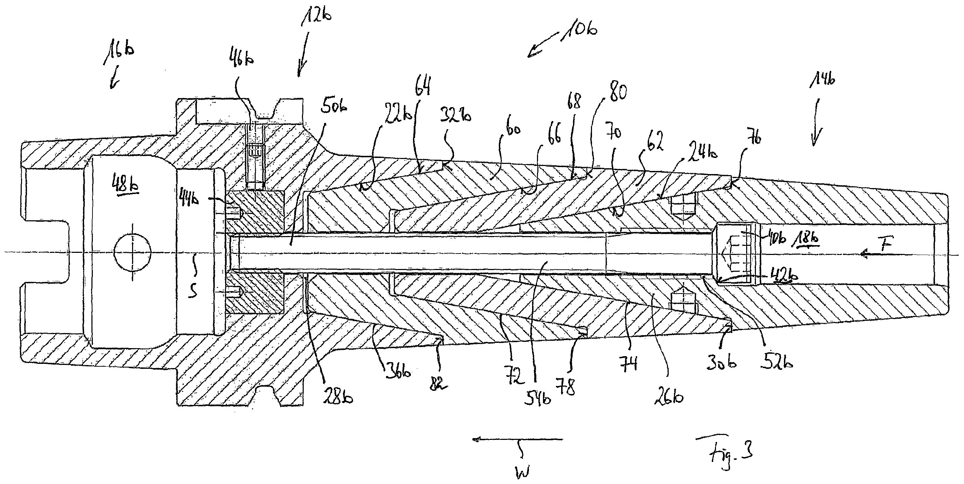

In Fig. 3 ist eine dritte Ausführungsform eines erfindungsgemäßen Werkzeughalters dargestellt. Gleiche Bauteile und Bauteilabschnitte wie in den vorhergehenden Figuren sind mit gleichen Bezugszeichen versehen, jedoch unter Beifügung des Kleinbuchstabens b. Zur Erläuterung dieser bereits bekannten Bauteile und Bauteilabschnitte wird ausdrücklich auf die Beschreibung der vorhergehenden Figuren verwiesen.

Bei der in Fig. 3 gezeigten dritten Ausführungsform sind zwischen dem WZM-Kopplungsteil 12b und dem Werkzeugspannteil 14b längs der Symmetrieachse S aufeinanderfolgend zwei Zwischenteile 60 und 62 vorgesehen.

Jedes der Zwischenteile 60 und 62 weist bei der dritten Ausführungsform zwei konische und zueinander im Wesentlichen parallele Anlageflächen auf. Eine erste Anlagefläche 64 des Zwischenteils 60 liegt an der werkzeugmaschinenseitigen Anlagefläche 22b des WZM-Kopplungsteils 12b an. Eine zweite Anlagefläche 66 des ersten Zwischenteils 60 liegt an der ersten Anlagefläche 68 des zweiten Zwischenteils 62 an und die zweite Anlagefläche 70 des zweiten Zwischenteils 62 liegt an der werkzeugseitigen Anlagefläche 24b des Werkzeugspannteils 14b an. Somit definieren die aneinander anliegenden Anlageflächen insgesamt drei Berührflächen, nämlich die Berührflächen 36b, 72 und 74.

Ebenso weisen die Zwischenteile 60 und 62 Axialanschlagsflächen auf, welche orthogonal zur Symmetrieachse S orientiert sind und um diese umlaufen. So liegt die Axialanschlagsfläche 30 des Werkzeugspannteils 14b an der Axialgegenanschlagsfläche 76 des zweiten Zwischenteils 62 an. In analoger Weise liegt die Axialanschlagsfläche 78 des zweiten Zwischenteils 62 an der Axialgegenanschlagsfläche 80 des ersten Zwischenteils 60 an. Schließlich liegt die Axialanschlagsfläche 82 des ersten Zwischenteils 60 an der Axialgegenanschlagsfläche 32 des WZM-Kopplungsteils 12b an. Dadurch ist der Fügeweg der Zwischenteile 60 und 62 sowie des Werkzeugspannteils 14b relativ zueinander sowie relativ zum WZM-Kopplungsteil 12b in Richtung des Pfeils W begrenzt.

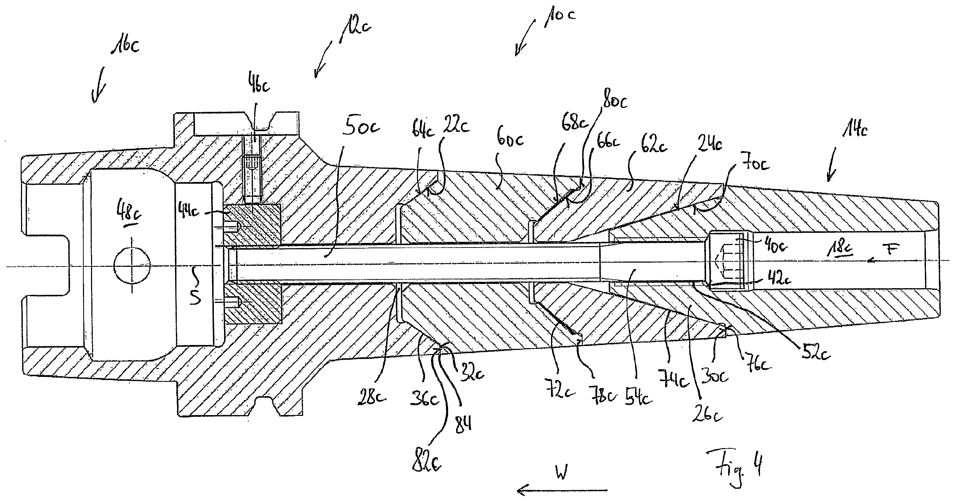

In Fig. 4 ist eine vierte, nicht erfindungsgemäße Ausführungsform eines Werkzeughalters dargestellt. Gleiche Bauteile und Bauteilabschnitte wie in den Fig. 1 bis 3 sind mit gleichen Bezugszeichen versehen, jedoch unter Beifügung des Kleinbuchstabens c. Zur Vermeidung unnötiger Wiederholungen wird zur Beschreibung dieser bereits bekannten Bauteile und Bauteilabschnitte auf die Beschreibung der vorhergehenden Fig. 1 bis 3 verwiesen.

Die Ausführungsform von Fig. 4 entspricht im Wesentlichen der von Fig. 3, wobei lediglich die Verjüngungswinkel der aneinander anliegenden Anlageflächen unterschiedlich sind. Der geringste Verjüngungswinkel ist gebildet zwischen der werkzeugseitigen konvexen Anlagefläche 24c des Werkzeugspannteils 14c und der konkaven Anlagefläche 70c des zweiten Verbindungsteils 62c. Der Verjüngungswinkel der konvexen Anlagefläche 68c des zweiten Zwischenteils 62c und der konkaven Anlagefläche 66c des ersten Zwischenteils 60c ist größer als der zuvor beschriebene Verjüngungswinkel zwischen den Anlageflächen 24c und 70c, jedoch kleiner als der Verjüngungswinkel zwischen der konvexen Anlagefläche 64c des ersten Zwischenteils 60c und der konkaven Anlagefläche 22c des WZM-Kopplungsteils 12c.

Unter Umständen wird hier ein Lösesicherungsmittel benötigt, da der Verjüngungswinkel der Anlageflächen 64c und 22c größer als der Grenzwinkel α_{G} für eine selbsthemmende Verbindung sein kann. In diesem Falle kann die umlaufende Trennfuge zwischen der Axialanschlagsfläche 82c des ersten Zwischenteils 60c und der Axialgegenanschlagsfläche 32c des WZM-Kopplungsteils 12c beispielsweise durch eine Laserschweißnaht geschlossen sein. Statt dieser stoffschlüssigen Lösesicherung kann auch, wie im Zusammenhang mit Fig. 1 beschrieben, von der Öffnung 48c des Spannkegels 16c aus eine Schraube durch die Durchgangsöffnung 50c des WZM-Kopplungsteils 12c hindurchgeführt sein und in Schraubeingriff mit dem ersten Zwischenteil 60c gebracht sein. Bei einer Mehrzahl von in axialer Richtung aufeinander folgenden Zwischenteilen ist jedoch eine Lösesicherung durch eine Laserschweißnaht oder ein anderes stoffschlüssiges Verfahren bevorzugt, da diese Lösesicherung vom Außenumfang des Werkzeughalters 12c her aufgebracht werden kann, ohne dass das Innere des Werkzeughalters 10c verändert werden muss. In der Nähe der Symmetrieachse S sind nämlich häufig auch Durchgangskanäle zur Durchleitung von Kühl- und Schmiermittel zum nicht dargestellten Werkzeug vorgesehen.

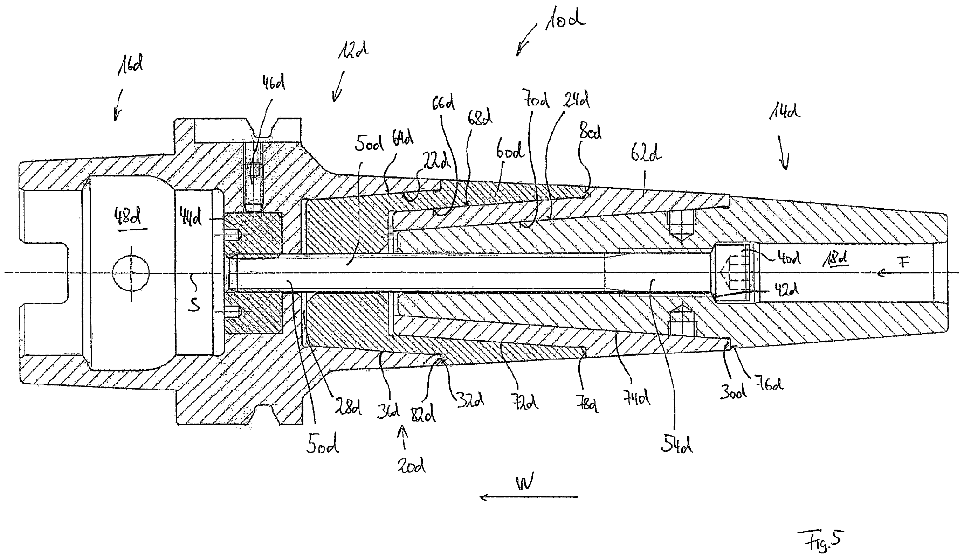

Die in Fig. 5 dargestellte fünfte Ausführungsform eines erfindungsgemäßen Werkzeughalters entspricht im Wesentlichen der in Fig. 3 dargestellten dritten Ausführungsform, auf deren Beschreibung hier ausdrücklich verwiesen wird.

Die fünfte Ausführungsform, bei welcher gleiche Bauteile und Bauteilabschnitte wie in den vorhergehenden Figuren mit gleichen Bezugszeichen versehen sind, jedoch unter Beifügung des Kleinbuchstabens d, unterscheidet sich von der dritten Ausführungsform durch den geringeren Verjüngungswinkel, welcher bei allen Anlageflächen dieser Ausführungsform gleich groß ist, und unterscheidet sich weiter dadurch, dass das erste und das zweite Zwischenteil 60d und 62d aus unterschiedlichen Werkstoffen hergestellt sind. Weiterhin sind die Zwischenteile 60d und 62d auch aus anderen Werkstoffen als das WZM-Kopplungsteil 12d und das Werkzeugspannteil 14d hergestellt.

Beispielsweise können das erste und das zweite Zwischenteil 60d und 62d aus unterschiedlichen keramischen Werkstoffen hergestellt sein, etwa aus Kunststoff, Gummi, Hartmetall, Aluminium, Schwermetall, Verbundwerkstoff oder Sintermaterial.

Zusätzlich können das in Fig. 5 gezeigte erste und das zweite Zwischenteil 60d und 62d mit Anlageflächen unterschiedlicher Verjüngungswinkel ausgebildet sein, wie dies in Fig. 4 gezeigt ist.

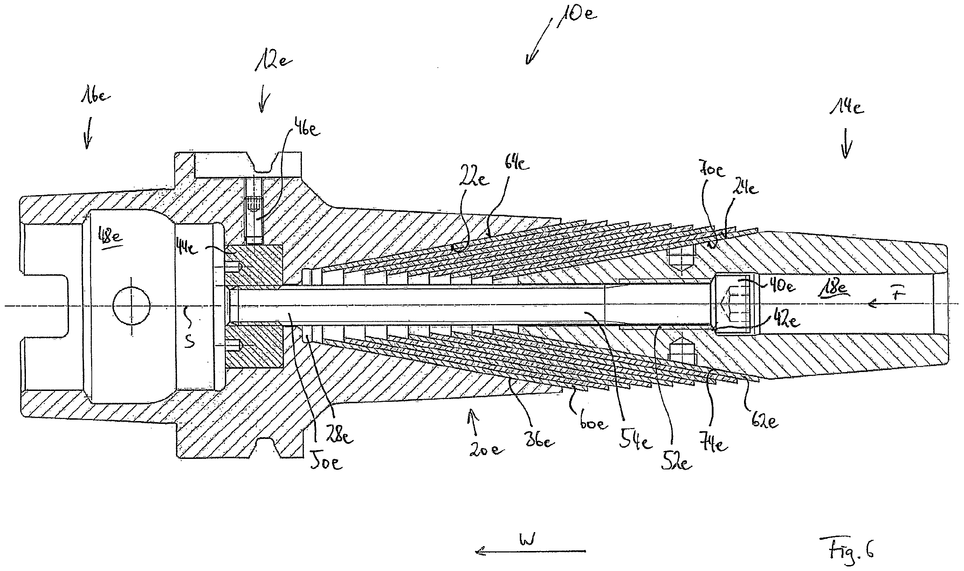

In Fig. 6 ist eine sechste Ausführungsform der vorliegenden Erfindung dargestellt. Gleiche Bauteile und Bauteilabschnitte wie in den vorhergehenden Fig. 1 bis 5 sind mit gleichen Bezugszeichen bezeichnet, jedoch unter Beifügung des Kleinbuchstabens e. Zur Beschreibung dieser Bauteile und Bauteilabschnitte wird ausdrücklich auf die zu den vorhergehenden Figuren gegebene Beschreibung verwiesen.

Die in Fig. 6 gezeigte sechste Ausführungsform eines erfindungsgemäßen Werkzeughalters 10e weist im Gegensatz zu den in den Fig. 3 bis 5 gezeigten Ausführungsformen mehr als zwei Zwischenteile auf. Genauer umfasst der Werkzeughalter 10e neun Zwischenteile mit jeweils konischen Anlageflächen. Der Übersichtlichkeit halber sind nicht alle Zwischenteile und Anlage- bzw. Gegenanlageflächen mit Bezugszeichen versehen. Fachleute werden jedoch ohne Weiteres erkennen, dass beispielsweise die in den Fig. 3 bis 5 gezeigten Ausführungsformen weitere Zwischenteile umfassen können, wobei stets das gleiche Fügeprinzip beibehalten ist. Die in Fig. 6 gezeigten Werkzeughalterteile, nämlich WZM-Kopplungsteil 12e, Werkzeugspannteil 14e, Zwischenteile 60e und 62e, sowie sieben weitere Zwischenteile sind durch die axiale Fügekraft F mit Presssitz gefügt.

Im Gegensatz zu den den bisher gezeigten Ausführungsformen weisen weder die Zwischenteile der sechsten Ausführungsform, noch das WZM-Kopplungsteil 12e oder das Werkzeugspannteil 14e Axialanschlagsmittel auf. Aus diesem Grunde ist der Fügeweg längs des Pfeils W beim Fügen der oben bezeichneten Werkzeughalterteile 12e, 14e, 60e, 62e sowie der weiteren Zwischenteile nur durch den aufgrund des Presssitzes zunehmenden Fügewiderstand, nicht jedoch durch mechanische Anschläge begrenzt. Der Werkzeughalter 10e kann durch ein Kraft-Weg-gesteuertes Fügeverfahren gefügt sein.

Versuche haben gezeigt, dass der Werkzeughalter 10e mit der in Fig. 6 gezeigten Bauart besonders gut zur Dämpfung von Biegeschwingungen um eine zur Symmetrieachse S orthogonale Biegeachse geeignet ist.

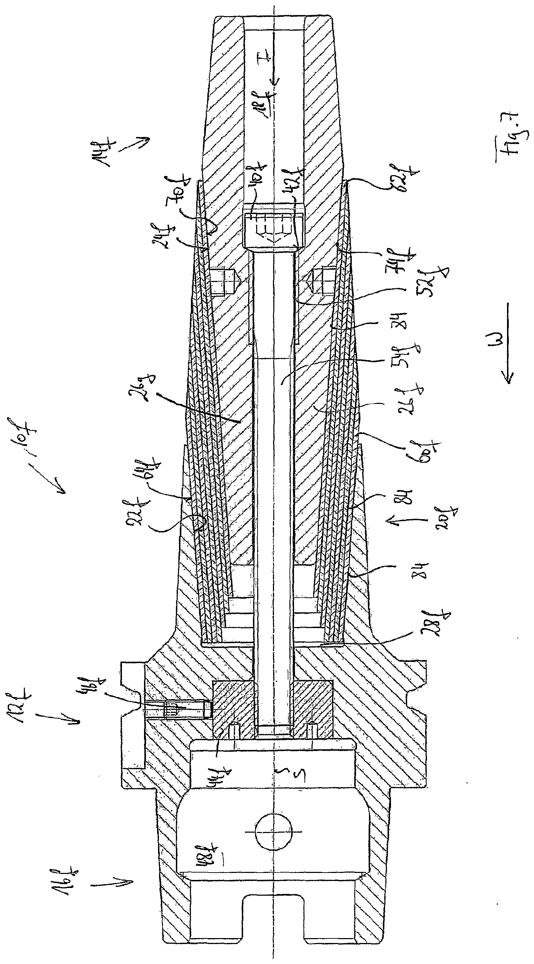

In Fig. 7 ist eine siebte Ausführungsform eines erfindungsgemäßen Werkzeughalters gezeigt. Gleiche Bauteile oder Bauteilabschnitte wie in den vorhergehenden Figuren sind in Fig. 7 mit gleichen Bezugszeichen bezeichnet, jedoch unter Beifügung des Kleinbuchstabens f. Zur Beschreibung dieser Bauteile und Bauteilabschnitte wird ausdrücklich auf die hierzu im Rahmen der vorhergehenden Figuren gegebene Beschreibung verwiesen.

Die siebte Ausführungsform eines Werkzeughalters 10f entspricht im Wesentlichen der in Fig. 6 gezeigten sechsten Ausführungsform. Hier sind lediglich die nach radial außen weisenden Längsenden der Zwischenteile durch spanende Bearbeitung geglättet, so dass der Werkzeughalter 10f eine glatte Oberfläche aufweist.

Weiterhin ist der Verjüngungswinkel der Anlageflächen der siebten Ausführungsform kleiner gewählt als der der sechsten Ausführungsform, so dass der Verbindungsdorn 26f des Werkzeugspannteils 14f axial tief in das am Werkzeugspannteil 14f anliegende Zwischenteil 62f einragen kann.

Die dem WZM-Kopplungsteil 12f näher liegenden Zwischenteile, insbesondere das diesem benachbarte Zwischenteil 60f ist in axialer Richtung verkürzt ausgebildet.

Nachzutragen ist noch, dass die Anlageflächen der Zwischenteile in den Fig. 6 oder 7 oder allgemein in vorhergehenden Ausführungsformen mit einer Oberflächenbeschichtung versehen sein können, etwa aus Titannitrat. Alternativ oder zusätzlich können zwischen zwei Zwischenteilen, d.h. zwischen den als Anlage- und Gegenanlagefläche wirkenden Flächen der Zwischenteile, dünne Lagen aus Titannitrat oder etwa aus Gummi, Carbon-Nanotubes, Kunststoff oder Teflon vorgesehen sein. In Fig. 7 ist beispielhaft eine solche Zwischenlage mit 84 bezeichnet. Eine solche Zwischenlage kann auch zwischen dem WZM-Kopplungsteil 12f und einem daran anliegenden weiteren Teil des Werkzeughalters 10f oder auch zwischen dem Werkzeugspannteil 14f und einem daran anliegenden weiteren Teil des Werkzeughalters 10f vorgesehen sein. Alternativ oder zusätzlich können an diesen Flächen die oben genannten Beschichtungen vorgesehen sein.

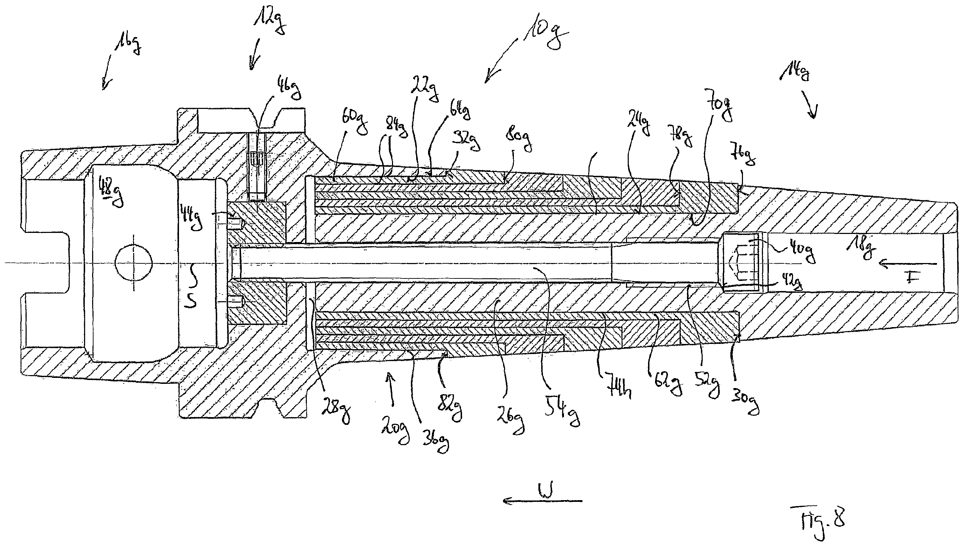

In Fig. 8 ist eine achte Ausführungsform eines erfindungsgemäßen Werkzeughalters 10g gezeigt. Gleiche Bauteile oder Bauteilabschnitte wie in den vorhergehenden Figuren sind in Fig. 8 mit gleichen Bezugszeichen versehen, jedoch unter Beifügung des Kleinbuchstabens g. Zur Beschreibung dieser Bauteile und Bauteilabschnitte wird ausdrücklich auf die zuvor im Zusammenhang mit den vorhergehenden Figuren gegebenen Beschreibungen verwiesen.

Der Werkzeughalter 10g von Fig. 8 weist fünf Zwischenteile auf, welche zwischen dem WZM-Kopplungsteil 12g und dem Werkzeugspannteil 14g angeordnet sind. Wie in den Fig. 1 bis 5 weisen das WZM-Kopplungsteil 12g, das Werkzeugspannteil 14g und die Zwischenteile Axialanschlagsmittel auf, welche den Fügeweg in Richtung des Pfeils W bei der Montage des Werkzeugshalters 10g begrenzen.

Die in Fig. 8 zwischen den Teilen 12g, 14g, 60g, 62g und weiteren Zwischenteilen des Werkzeughalters 10g ausgebildeten Anlage- und Gegenanlageflächen sind im Wesentlichen zylindrisch und konzentrisch zur Symmetrieachse S als Zylinderachse ausgebildet. Zur Erreichung eines Presssitzes sind die Außendurchmesser der Zwischenteile und des Verbindungsdorns 26g bezüglich der Innendurchmesser der konkaven Anschlagsflächen, in welche die jeweiligen konvexen Außenflächen einzuführen sind, mit einem Übermaß hergestellt. Zur Fertigung des Presssitzes kann dann das jeweils außen umgebende Teil, WZM-Kopplungsteil 12g oder eines der Zwischenteile erwärmt werden, so dass es sich thermisch ausdehnt. Alternativ oder zusätzlich können die im montierten Zustand dem WZM-Kopplungsteil näheren Längsenden mit einer Fase oder einer Einführschräge ausgebildet sein, so dass der Pressfügevorgang erleichtert ist.

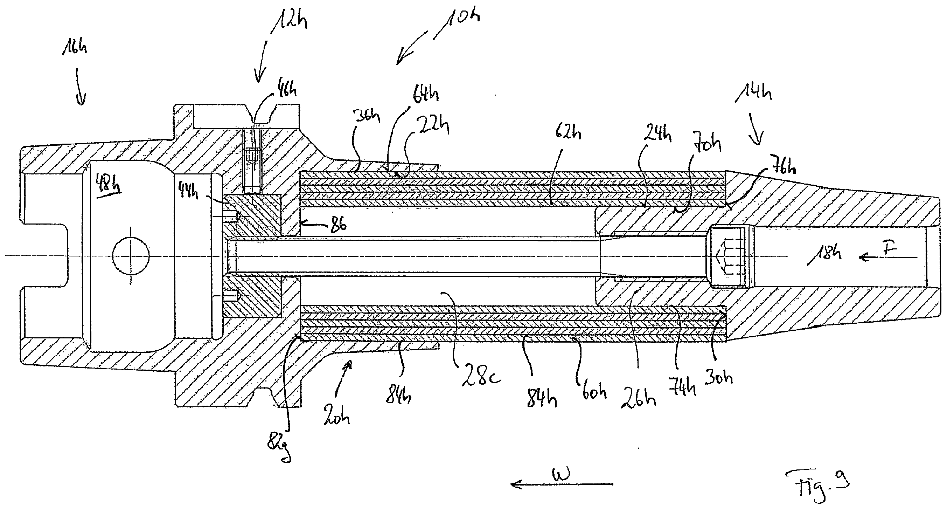

In Fig. 9 ist eine neunte Ausführungsform eines erfindungsgemäßen Werkzeughalters 10h gezeigt. Gleiche Bauteile oder Bauteilabschnitte wie in den vorhergehenden Figuren sind mit gleichen Bezugszeichen versehen, jedoch unter Beifügung des Kleinbuchstabens h. Zur Beschreibung dieser Bauteile und Bauteilabschnitte wird auf die im Zusammenhang mit den vorhergehenden Fig. 1 bis 8 gegebene Beschreibung verwiesen.

Die in Fig. 9 gezeigte neunte Ausführungsform entspricht im Wesentlichen der in Fig. 8 gezeigten achten Ausführungsform des Werkzeughalters 10g.

Die Zwischenteile der neunten Ausführungsform weisen jedoch alle die gleiche axiale Länge auf und sind mit Presssitz gefügt. Zwei radial benachbarte Zwischenteile sind hierzu in an sich bekannter Weise mit Übermaß im Außendurchmesser bzw. mit Untermaß im Innendurchmesser gefertigt.

Die axialen Längsenden der Zwischenteile liegen an einer werkzeugmaschinenseitigen Anschlagfläche 86 an, welche auf Seiten des WZM-Kopplungsteils 12h das Verbindungsmaul 28h axial begrenzt.

Die werkzeugnäheren Längsenden der Zwischenteile liegen an einer Anschlagsfläche 30h des Werkzeugspannteils 14h an.

Es sei ausdrücklich darauf hingewiesen, dass auch zwischen diesen zylindrischen Anlageflächen Zwischenlagen 84h vorgesehen oder/und auf die Anlageflächen Beschichtungen aufgetragen sein können, wie dies im Zusammenhang mit Fig. 7 erläutert wurde.

Der Vorteil von zylindrischen Anlageflächen, wie sie in den Fig. 8 und 9 zu sehen sind, liegt darin, dass die in radialer Richtung wirkende Kraft im Wesentlichen unabhängig von der axialen Fügekraft F eingestellt werden kann.

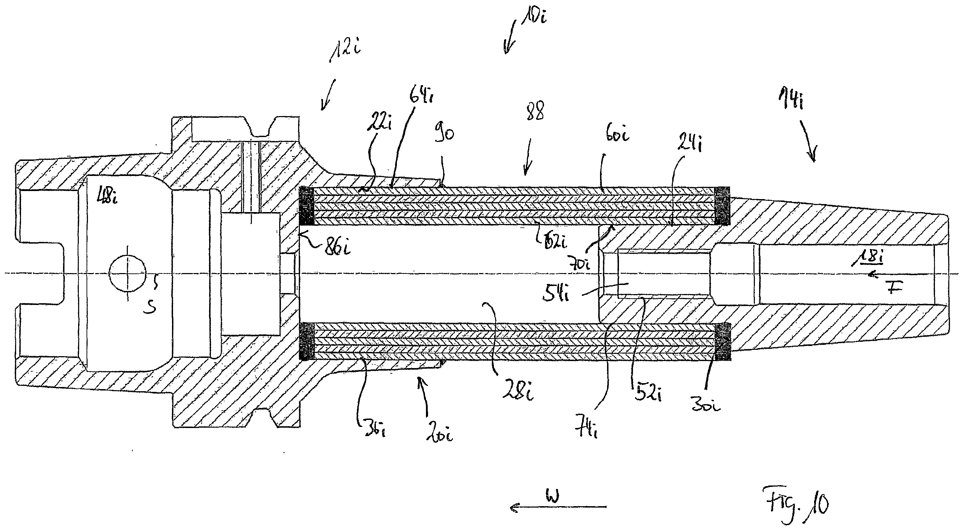

In Fig. 10 ist eine zehnte Ausführungsform eines erfindungsgemäßen Werkzeughalters dargestellt. Gleiche Bauteile oder Bauteilabschnitte wie in den vorhergehenden Figuren sind in Fig. 10 mit gleichen Bezugszeichen versehen, jedoch unter Beifügung des Kleinbuchstabens i. Zur Beschreibung dieser Bauteile oder Bauteilabschnitte wird ausdrücklich auf die im Zusammenhang mit den vorhergehenden Figuren gegebene Beschreibung verwiesen.

Die Ausführungsform von Fig. 10 entspricht im Wesentlichen der von Fig. 9. Lediglich sind die Zwischenteile an ihren Längsenden stoffschlüssig zu einem Zwischenteil-Paket 88 verbunden, etwa durch Verschweißen.

Darüber hinaus ist das Zwischenteil-Paket 88 mit dem WZM-Kopplungsteil 12i durch eine um die Symmetrieachse S umlaufende Schweißnaht 90 verbunden. Diese Schweißnaht 90, welche beispielsweise im Laserschweißverfahren hochgenau aufgebracht sein kann, dient lediglich der Lösesicherung zur Verhinderung, dass sich das WZM-Kopplungsteil 12i vom Zwischenteil-Paket 88 löst. Die Schweißnaht 90 bildet somit eine Art Heftnaht.

## Patentansprüche

1. Werkzeughalter zur bewegungsübertragenden Kopplung eines Werkzeugs mit einem um eine Werkzeugmaschinendrehachse drehbaren Bewegungsausgabeteil einer Werkzeugmaschine, welcher Werkzeughalter (10) eine Werkzeughalterachse (S) aufweist, die in einem an der Werkzeugmaschine eingespannten Zustand des Werkzeughalters mit der Werkzeugmaschinendrehachse im Wesentlichen zusammenfällt, und welcher Werkzeughalter (10) an seinem einen axialen Endbereich ein WZM-Kopplungsteil (12) mit einem Kopplungsabschnitt (16) zur Kopplung des Werkzeughalters (10) mit der Werkzeugmaschine und an seinem anderen axialen Endbereich ein vom WZM-Kopplungsteil (12) gesondert ausgebildetes Werkzeugspannteil (14) mit einem Spannabschnitt (18) zur Aufnahme des Werkzeugs aufweist und als Schaftaufnahmeraum ausgebildet ist, wobei das Werkzeugspannteil (14) und das WZM-Kopplungsteil (12) zur gemeinsamen Drehung um die Werkzeughalterachse (S) verbunden sind, wobei das Werkzeugspannteil (14) eine werkzeugseitige Anlagefläche (24) aufweist und das WZM-Kopplungsteil (12) eine werkzeugmaschinenseitige Anlagefläche (22) aufweist, welche Anlageflächen (22, 24) im montierten Zustand des Werkzeughalters unter Bildung wenigstens einer Berührfläche (36, 72, 74) an einer Gegenanlagefläche (22, 24, 64, 70) anliegen, wobei die Anlageflächen (22, 24) und die zugeordneten Gegenanlageflächen (22, 24, 64, 70) zur Übertragung von Kraft sowohl in radialer als auch in axialer Richtung bezüglich der Werkzeughalterachse (S) ausgebildet sind und wobei das WZM-Kopplungsteil (12) und das Werkzeugspannteil (14) durch Ausübung von axialer Fügekraft (F) mittels Presssitzen oder selbsthemmender konischer Flächen zu dem Werkzeughalter (10) zusammengefügt sind, wobei der Werkzeughalter Axialanschlagmittel aufweist, welche aus einer Axialanschlagfläche (30) am Werkzeugspannteil (14) und einer Axialgegenanschlagfläche (32) des WZM-Kopplungsteil (12) gebildet sind, **dadurch gekennzeichnet, dass** das WZM-Kopplungsteil (12) und das Werkzeugspannteil (14) zusätzlich durch eine Schraube (38) gegen eine Trennung in axialer Richtung der Werkzeughalterachse (S) gesichert sind, wobei ein Schraubenkopf (40) der Schraube (38) im Werkzeugspannteil (14) angeordnet ist und wobei ein dem Schraubenkopf (40) der Schraube (38) entgegengesetztes Längsende der Schraube (38) in eine Mutter (44) eingedreht ist, welche im WZM-Kopplungsteil (12) angeordnet ist, oder radial oder/und axial benachbarte Teile des Werkzeughalters miteinander verklebt, verlötet, verschweißt oder allgemein stoffschlüssig gegen Lösen gesichert sind, vorzugsweise durch eine um die Werkzeughalterachse umlaufende Verbindungsstelle.

2. Werkzeughalter nach Anspruch 1,
**dadurch gekennzeichnet, dass** die werkzeugseitige Anlagefläche (24) die Gegenanlagefläche (24) der werkzeugmaschinenseitigen Anlagefläche (22) ist und umgekehrt.

3. Werkzeughalter nach Anspruch 1 oder 2,
**dadurch gekennzeichnet, dass** er wenigstens zwei in radialer oder/und in axialer Richtung voneinander mit Abstand vorgesehene Berührflächen (36, 72, 74) aufweist.

4. Werkzeughalter nach Anspruch 3,
**dadurch gekennzeichnet, dass** er wenigstens ein gesondertes radial oder/und axial zwischen dem WZM-Kopplungsteil (12) und dem Werkzeugspannteil (14) angeordnetes Zwischenteil (60, 62) umfasst, an welchem eine werkzeugmaschinenseitige (64, 68) und eine werkzeugseitige Zwischenanlagefläche (66, 70) zur Anlage an einer jeweils zugeordneten Gegenanlagefläche (22, 24, 64, 66, 68, 70) vorgesehen sind.

5. Werkzeughalter nach Anspruch 4,
**dadurch gekennzeichnet, dass** er eine Mehrzahl von gesonderten radial oder/und axial zwischen dem WZM-Kopplungsteil (12) und dem Werkzeugspannteil (14) angeordneten Zwischenteilen (60, 62) mit je einer werkzeugmaschinenseitigen (64, 68) und einer werkzeugseitigen Zwischenanlagefläche (66, 70) zur Anlage an zugeordneten Gegenanlageflächen (22, 24, 64, 66, 68, 70) umfasst.

6. Werkzeughalter nach Anspruch 4 oder 5,
**dadurch gekennzeichnet, dass** die Gegenanlagefläche (22, 24) einer Zwischenanlagefläche (64, 66, 68, 70) eines Zwischenteils (60, 62) die werkzeugmaschinenseitige Anlagefläche (22) oder die werkzeugseitige Anlagefläche (24) oder gegebenenfalls eine Zwischenanlagefläche (64, 66, 68, 70) eines weiteren Zwischenteils (60, 62) ist.

7. Werkzeughalter nach einem der vorhergehenden Ansprüche, gegebenenfalls unter Einbeziehung eines der Ansprüche 4 bis 6,
**dadurch gekennzeichnet, dass** wenigstens eine der Anlageflächen (22, 24, 64, 66, 68, 70) und die dieser zugeordnete Gegenanlagefläche (22, 24, 64, 66, 68, 70) selbsthemmend ausgebildet sind, so dass das die jeweilige Anlagefläche (22, 24, 64, 66, 68, 70) tragende Teil des Werkzeughalters: WZM-Kopplungsteil (12), Werkzeugspannteil (14) oder Zwischenteil (60, 62), und das die zugeordnete Gegenanlagefläche (22, 24, 64, 66, 68, 70) tragende Teil des Werkzeughalters: WZM-Kopplungsteil (12), Werkzeugspannteil (14) oder Zwischenteil (10, 62), nach Ausübung der axialen Fügekraft (F) kraftschlüssig zur Bildung des Werkzeughalters (10) verbunden sind.

8. Werkzeughalter nach einem der vorhergehenden Ansprüche,
**dadurch gekennzeichnet, dass** wenigstens eine der Anlageflächen (22, 24, 64, 66, 68, 70) und die ihr zugeordnete Gegenanlagefläche (22, 24, 64, 66, 68, 70) in axialer Richtung (W) zumindest abschnittsweise verjüngend, vorzugsweise konisch verjüngend, ausgebildet sind.

9. Werkzeughalter nach einem der vorhergehenden Ansprüche,
**dadurch gekennzeichnet, dass** eine der Flächen: Anlagefläche (22, 24, 64, 66, 68, 70) und zugeordnete Gegenanlagefläche (22, 24, 64, 66, 68, 70), die jeweils andere umgibt, wobei, bezogen auf eine Axialposition in einem am montierten Werkzeughalter (10) gemeinsamen Axialabschnitt (34) der beiden Flächen, eine zur Werkzeughalterachse (S) orthogonale Außenabmessung der umgebenen Fläche (24, 64, 68) im unmontierten Zustand ein Übermaß bezüglich einer zur Werkzeughalterachse (S) orthogonalen Innenabmessung der jeweils umgebenden Fläche (22, 66, 70) aufweist.

10. Werkzeughalter nach Anspruch 9,
**dadurch gekennzeichnet, dass** wenigstens eine Anlagefläche (22g, 24g, 64g, 66g, 68g, 70g; 22h, 24h, 64h, 66h, 68h, 70h; 22i, 24i, 64i, 66i, 68i, 70i) und die ihr zugeordnete Gegenanlagefläche (22g, 24g, 64g, 66g, 68g, 70g; 22h, 24h, 64h, 66h, 68h, 70h; 22i, 24i, 64i, 66i, 68i, 70i) zumindest abschnittsweise im Wesentlichen zylindrische Flächen sind, wobei die Werkzeughalterachse (S) im Wesentlichen die gemeinsame Zylinderachse beider Flächen ist.

11. Werkzeughalter nach einem der vorhergehenden Ansprüche,
**dadurch gekennzeichnet, dass** wenigstens zwei, vorzugsweise alle radial oder/und axial benachbarte Teile (12, 14, 60, 62) des Werkzeughalters (10) in der zwischen ihnen liegenden Berührfläche (36, 72, 74) mit Presssitz verbunden sind.

12. Werkzeughalter nach einem der vorhergehenden Ansprüche,
**dadurch gekennzeichnet, dass** Lösesicherungsmittel (38, 90) vorgesehen sind, welche, etwa durch Form- oder/und Stoffschluss, ein Lösen radial oder/und axial benachbarter Teile (12, 14, 60, 62) des Werkzeughalters (10) voneinander verhindern.

13. Werkzeughalter nach einem der vorhergehenden Ansprüche,
**dadurch gekennzeichnet, dass** wenigstens zwei, vorzugsweise alle radial oder/und axial benachbarte Teile (12, 14, 60, 62) des Werkzeughalters (10) Axialanschlagsmittel (30, 32, 76, 78, 80, 82) aufweisen, welche einen axialen Fügeweg der radial oder/und axial benachbarten Teile (12, 14, 60, 62) begrenzen.

14. Werkzeughalter nach Anspruch 13,
**dadurch gekennzeichnet, dass** die Axialanschlagsmittel (30, 32, 76, 78, 80, 82) eine um die Werkzeughalterachse (S) umlaufende Anschlagsfläche (30, 78, 82) eines ersten Teils (14, 60, 62) und eine um die Werkzeughalterachse (S) umlaufende Gegenanschlagsfläche (32, 76, 80) eines zum ersten Teil (14, 60, 62) axial benachbarten zweiten Teils (12, 60, 62) des Werkzeughalters (10) umfassen.

15. Werkzeughalter nach einem der vorhergehenden Ansprüche, unter Einbeziehung eines der Ansprüche 4 bis 6,
**dadurch gekennzeichnet, dass** wenigstens ein Zwischenteil (60d, 62d) aus einem anderen Werkstoff als das WZM-Kopplungsteil (12d) oder das Werkzeugspannteil (14d) gebildet ist.

16. Werkzeughalter nach einem der vorhergehenden Ansprüche, unter Einbeziehung des Anspruchs 5 oder 6,
**dadurch gekennzeichnet, dass** wenigstens zwei, vorzugsweise alle, Zwischenteile (60d, 62d) aus jeweils einem anderen Werkstoff gebildet sind.

17. Werkzeughalter nach einem der vorhergehenden Ansprüche, unter Einbeziehung des Anspruchs 8,
**dadurch gekennzeichnet, dass** wenigstens zwei mit radialem oder/und axialem Abstand voneinander gebildete Berührflächen (36c, 72c, 74c) in axialer Richtung zumindest abschnittsweise verjüngend ausgebildet sind, wobei die Verjüngungsabschnitte der Berührflächen (36c, 72c, 74c) unterschiedliche Verjüngungswinkel aufweisen.

18. Werkzeughalter nach Anspruch 17,
**dadurch gekennzeichnet, dass** der Verjüngungswinkel von mit radialem oder/und axialem Abstand voneinander gebildeten Berührflächen (36c, 72c, 74c) vom Werkzeugspannteil zum WZM-Kopplungsteil hin größer wird.

19. Werkzeughalter nach einem der vorhergehenden Ansprüche, unter Einbeziehung eines der Ansprüche 4 bis 6,
**dadurch gekennzeichnet, dass** wenigstens zwei mit radialem oder/und axialem Abstand voneinander vorgesehene Anlageflächen (22, 24, 64, 66, 68, 70) oder/und ihre zugeordneten Gegenanlageflächen (22, 24, 64, 66, 68, 70) unterschiedliche Oberflächenrauhigkeiten aufweisen.

20. Werkzeughalter nach einem der vorhergehenden Ansprüche,
**dadurch gekennzeichnet, dass** wenigstens eine Anlagefläche (22, 24, 64, 66, 68, 70) oder/und eine Gegenanlagefläche (22, 24, 64, 66, 68, 70) mit einer Oberflächenbeschichtung versehen ist.

21. Werkzeughalter nach einem der vorhergehenden Ansprüche,
**dadurch gekennzeichnet, dass** zwischen wenigstens einer Anlagefläche (22, 24, 64, 66, 68, 70) und einer dieser zugeordneten Gegenanlagefläche (22, 24, 64, 66, 68, 70) eine Zwischenlage (84) vorgesehen ist.

22. Werkzeughalter nach einem der vorhergehenden Ansprüche, unter Einbeziehung des Anspruchs 8,
**dadurch gekennzeichnet, dass** eine Mehrzahl von Zwischenteilen (60i, 62i), vorzugsweise alle Zwischenteile (60i, 62i), im Wesentlichen starr miteinander zu einem Zwischenteil-Paket (88) verbunden sind, vorzugsweise an wenigstens einem Längsende, besonders bevorzugt an beiden Längsenden.

## Claims

1. Tool holder for the movement-transmitting coupling of a tool to a movement output part of a machine tool that is rotatable about a machine tool rotational axis, which tool holder (10) has a tool holder axis (S) which substantially coincides with the machine tool rotational axis when the tool holder is clamped to the machine tool, and which tool holder (10) has, at one axial end portion thereof, a machine tool coupling part (12) having a coupling portion (16) for coupling the tool holder (10) to the machine tool and, at the other axial end portion thereof, a machine tool clamping part (14) formed separately from the machine tool coupling part (12) and having a clamping portion (18) for receiving the tool, and is formed as a shaft receiving space, the tool clamping part (14) and the machine tool coupling part (12) being connected for conjoint rotation about the tool holder axis (S), the tool clamping part (14) having a tool-side bearing surface (24) and the machine tool coupling part (12) having a machine tool-side bearing surface (22), which bearing surfaces (22, 24) rest against a counter bearing surface (22, 24, 64, 70) when the tool holder is mounted in order to form at least one contact surface (36, 72, 74), the bearing surfaces (22, 24) and the associated counter bearing surfaces (22, 24, 64, 70) being designed to transmit force in both the radial and the axial direction with respect to the tool holder axis (S) and the machine tool coupling part (12) and the tool clamping part (14) being joined to form the tool holder (10) by the application of axial joining force (F) by means of press fitting or by self-locking conical surfaces, the tool holder comprising axial stop means formed of an axial stop surface (30) on the tool clamping part (14) and an axial counter stop surface (32) of the machine tool coupling part (12), **characterised in that** the machine tool coupling part (12) and the tool clamping part (14) are additionally secured against separation in the axial direction of the tool holder axis (S) by means of a screw (38), a screw head (40) of the screw (38) being arranged in the tool clamping part (14) and a longitudinal end of the screw (38) that is opposite the screw head (40) of the screw (38) being screwed into a nut (44) arranged in the machine tool coupling part (12), or radially and/or axially adjacent parts of the tool holder being bonded, soldered, welded to one another or generally integrally secured against loosening, preferably by means of a joint which rotates about the tool holder axis.

2. Tool holder according to claim 1, **characterised in that** the tool-side bearing surface (24) is the counter bearing surface (24) of the machine tool-side bearing surface (22) and vice versa.

3. Tool holder according to either claim 1 or claim 2, **characterised in that** it comprises at least two contact surfaces (36, 72, 74) at a distance from one another in the radial and/or the axial direction.

4. Tool holder according to claim 3, **characterised in that** it comprises at least one separate intermediate part (60, 62) arranged radially and/or axially between the machine tool coupling part (12) and the tool clamping part (14), on which intermediate part a machine tool-side (64, 68) and a tool-side intermediate bearing surface (66, 70) are provided for resting against an associated counter bearing surface (22, 24, 64, 66, 68, 70) in each case.

5. Tool holder according to claim 4, **characterised in that** it comprises a plurality of separate intermediate parts (60, 62) arranged radially and/or axially between the machine tool coupling part (12) and the tool clamping part (14), each having a machine tool-side (64, 68) and a tool-side intermediate bearing surface (66, 70) for resting against associated counter bearing surfaces (22, 24, 64, 66, 68, 70).

6. Tool holder according to either claim 4 or claim 5, **characterised in that** the counter bearing surface (22, 24) of an intermediate bearing surface (64, 66, 68, 70) of an intermediate part (60, 62) is the machine tool-side bearing surface (22) or the tool-side bearing surface (24) or optionally an intermediate bearing surface (64, 66, 68, 70) of a further intermediate part (60, 62).

7. Tool holder according to any of the preceding claims, optionally including any of claims 4 to 6, **characterised in that** at least one of the bearing surfaces (22, 24, 64, 66, 68, 70) and the counter bearing surface (22, 24, 64, 66, 68, 70) associated therewith are self-locking, such that the part of the tool holder having the relevant bearing surface (22, 24, 64, 66, 68, 70): machine tool coupling part (12), tool clamping part (14) or intermediate part (60, 62), and the part of the tool holder having the associated counter bearing surface (22, 24, 64, 66, 68, 70): machine tool coupling part (12), tool clamping part (14) or intermediate part (10, 62), are frictionally connected in order to form the tool holder (10) after the axial joining force (F) has been applied.

8. Tool holder according to any of the preceding claims, **characterised in that** at least one of the bearing surfaces (22, 24, 64, 66, 68, 70) and its associated counter bearing surface (22, 24, 64, 66, 68, 70) are formed so as to taper at least in part, preferably taper conically, in the axial direction (W).

9. Tool holder according to any of the preceding claims, **characterised in that** one of the surfaces: bearing surface (22, 24, 64, 66, 68, 70) and associated counter bearing surface (22, 24, 64, 66, 68, 70), surrounds the corresponding other surface, and, with regard to an axial position in a common axial portion (34) of the two surfaces on the mounted tool holder (10), an outer dimension, which is orthogonal with respect to the tool holder axis (S), of the surrounded surface (24, 64, 68) being oversized in the unmounted state with respect to an inner dimension, which is orthogonal with respect to the tool holder axis (S), of the corresponding surrounding surface (22, 66, 70).

10. Tool holder according to claim 9, **characterised in that** at least one bearing surface (22g, 24g, 64g, 66g, 68g, 70g; 22h, 24h, 64h, 66h, 68h, 70h; 22i, 24i, 64i, 66i, 68i, 70i) and its associated counter bearing surface (22g, 24g, 64g, 66g, 68g, 70g; 22h, 24h, 64h, 66h, 68h, 70h; 22i, 24i, 64i, 66i, 68i, 70i) are substantially cylindrical surfaces at least in part, the tool holder axis (S) being substantially the common cylinder axis of the two surfaces.

11. Tool holder according to any of the preceding claims, **characterised in that** at least two, preferably all, radially and/or axially adjacent parts (12, 14, 60, 62) of the tool holder (10) are connected with a press fit in the contact surface (36, 72, 74) between said parts.

12. Tool holder according to any of the preceding claims, **characterised in that** anti-separation means (38, 90) are provided, which, for example by means of a form-fit and/or integral bond, prevent radially and/or axially adjacent parts (12, 14, 60, 62) of the tool holder (10) from separating from one another.

13. Tool holder according to any of the preceding claims, **characterised in that** at least two, preferably all, radially and/or axially adjacent parts (12, 14, 60, 62) of the tool holder (10) comprise axial stop means (30, 32, 76, 78, 80, 82) which define an axial joining path of the radially and/or axially adjacent parts (12, 14, 60, 62).

14. Tool holder according to claim 13, **characterised in that** the axial stop means (30, 32, 76, 78, 80, 82) comprise a stop surface (30, 78, 82), which rotates about the tool holder axis (S), of a first part (14, 60, 62) and a counter stop face (32, 76, 80), which rotates about the tool holder axis (S), of a second part (12, 60, 62) of the tool holder (10) that is axially adjacent to the first part (14, 60, 62).

15. Tool holder according to any of the preceding claims, including any of claims 4 to 6, **characterised in that** at least one intermediate part (60d, 62d) is made of a different material from the machine tool coupling part (12d) or the tool clamping part (14d).

16. Tool holder according to any of the preceding claims, including claim 5 or claim 6, **characterised in that** at least two, preferably all, intermediate parts (60d, 62d) are each made of a different material.

17. Tool holder according to any of the preceding claims, including claim 8, **characterised in that** at least two contact surfaces (36c, 72c, 74c) at a radial and/or axial distance from one another are formed so as to taper at least in part in the axial direction, the tapering portions of the contact surfaces (36c, 72c, 74c) having different taper angles.

18. Tool holder according to claim 17, **characterised in that** the taper angle of contact surfaces (36c, 72c, 74c) at a radial and/or axial distance from one another increases from the tool clamping part to the machine tool coupling part.

19. Tool holder according to any of the preceding claims, including any of claims 4 to 6, **characterised in that** at least two bearing surfaces (22, 24, 64, 66, 68, 70) provided at a radial and/or axial distance from one another and/or their associated counter bearing surfaces (22, 24, 64, 66, 68, 70) have different surface roughnesses.

20. Tool holder according to any of the preceding claims, **characterised in that** at least one bearing surface (22, 24, 64, 66, 68, 70) and/or a counter bearing surface (22, 24, 64, 66, 68, 70) is provided with a surface coating.

21. Tool holder according to any of the preceding claims, **characterised in that** an intermediate layer (84) is provided between at least one bearing surface (22, 24, 64, 66, 68, 70) and a counter bearing surface (22, 24, 64, 66, 68, 70) associated therewith.

22. Tool holder according to any of the preceding claims, including claim 8, **characterised in that** a plurality of intermediate parts (60i, 62i), preferably all the intermediate parts (60i, 62i), are substantially rigidly interconnected in order to form an intermediate-part assembly (88), preferably at at least one longitudinal end, particularly preferably at both longitudinal ends.

## Revendications

1. Porte-outil pour le couplage de transmission de mouvement d'un outil avec une partie de sortie de mouvement rotative autour d'un axe de rotation de machine-outil d'une machine-outil, lequel porte-outil (10) présente un axe de porte-outil (S) qui, dans un état serré du porte-outil au niveau de la machine-outil, coïncide sensiblement avec l'axe de rotation de machine-outil, et lequel porte-outil (10) présente, au niveau de son extrémité axiale, une partie de couplage de machine-outil (12) avec une section de couplage (16) pour le couplage du porte-outil (10) avec la machine-outil et, au niveau de son autre extrémité axiale, une partie de serrage d'outil (14) réalisée séparément de la partie de couplage de machine-outil (12) avec une section de serrage (18) pour recevoir l'outil et est réalisé en tant qu'espace de réception d'arbre, dans lequel la partie de serrage d'outil (14) et la partie de couplage de machine-outil (12) sont raccordées pour la rotation commune autour de l'axe de porte-outil (S),
dans lequel la partie de serrage d'outil (14) présente une surface d'appui côté outil (24) et la partie de couplage de machine-outil (12) présente une surface d'appui côté machine-outil (22), lesquelles surfaces d'appui (22, 24), à l'état monté du porte-outil, appuient sur une contre-surface d'appui (22, 24, 64, 70) en formant au moins une surface de contact (36, 72, 74), dans lequel les surfaces d'appui (22, 24) et les contre-surfaces d'appui (22, 24, 64, 70) associées sont réalisées pour la transmission de force aussi bien dans la direction radiale que dans la direction axiale par rapport à l'axe de porte-outil (S) et dans lequel la partie de couplage de machine-outil (12) et la partie de serrage d'outil (14) constituent par assemblage le porte-outil (10) par l'application d'une force d'assemblage axiale (F) au moyen d'ajustements serrés ou de surfaces coniques autobloquantes,
dans lequel le porte-outil présente des moyens de butée axiale, lesquels sont composés d'une surface de butée axiale (30) au niveau de la partie de serrage d'outil (14) et d'une contre-surface de butée axiale (32) de la partie de couplage de machine-outil (12), **caractérisé en ce que**
la partie de couplage de machine-outil (12) et la partie de serrage d'outil (14) sont en outre fixées par une vis (38) pour empêcher une séparation dans la direction axiale de l'axe de porte-outil (S), dans lequel une tête de vis (40) de la vis (38) est agencée dans la partie de serrage d'outil (14) et dans lequel une extrémité longitudinale de la vis (38) opposée à la tête de vis (40) de la vis (38) est vissée dans un écrou (44), lequel est agencé dans la partie de couplage de machine-outil (12), ou des parties radialement ou/et axialement adjacentes du porte-outil sont collées, brasées, soudées ou fixées l'une à l'autre généralement par liaison de matière pour empêcher le détachement, de préférence par un point de raccordement tournant autour de l'axe de porte-outil.

2. Porte-outil selon la revendication 1,
**caractérisé en ce que** la surface d'appui côté outil (24) est la contre-surface d'appui (24) de la surface d'appui côté machine-outil (22) et inversement.

3. Porte-outil selon la revendication 1 ou 2,
**caractérisé en ce qu'**il présente au moins deux surfaces de contact (36, 72, 74) prévues à distance l'une de l'autre dans la direction radiale ou/et axiale.

4. Porte-outil selon la revendication 3,
**caractérisé en ce qu'**il comprend au moins une partie intermédiaire (60, 62) séparée agencée radialement ou/et axialement entre la partie de couplage de machine-outil (12) et la partie de serrage d'outil (14), au niveau de laquelle sont prévues des surfaces d'appui intermédiaires côté machine-outil (64, 68) et côté outil (66, 70) pour l'appui sur une contre-surface d'appui (22, 24, 64, 66, 68, 70) respectivement associée.

5. Porte-outil selon la revendication 4,
**caractérisé en ce qu'**il comprend une pluralité de parties intermédiaires (60, 62) séparées agencées radialement ou/et axialement entre la partie de couplage de machine-outil (12) et la partie de serrage d'outil (14) avec chacune une surface d'appui intermédiaire côté machine-outil (64, 68) et côté outil (66, 70) pour l'appui sur des contre-surfaces d'appui (22, 24, 64, 66, 68, 70) associées.

6. Porte-outil selon la revendication 4 ou 5,
**caractérisé en ce que** la contre-surface d'appui (22, 24) d'une surface d'appui intermédiaire (64, 66, 68, 70) d'une partie intermédiaire (60, 62) est la surface d'appui côté machine-outil (22) ou la surface d'appui côté outil (24) ou le cas échéant une surface d'appui intermédiaire (64, 66, 68, 70) d'une autre partie intermédiaire (60, 62).

7. Porte-outil selon l'une des revendications précédentes, le cas échéant en tenant compte de l'une des revendications 4 à 6,
**caractérisé en ce qu'**au moins l'une des surfaces d'appui (22, 24, 64, 66, 68, 70) et la contre-surface d'appui (22, 24, 64, 66, 68, 70) associée à celle-ci sont réalisées de façon autobloquante, de sorte que la partie du porte-outil portant la surface d'appui (22, 24, 64, 66, 68, 70) respective : partie de couplage de machine-outil (12), partie de serrage d'outil (14) ou partie intermédiaire (60, 62), et la partie du porte-outil portant la contre-surface d'appui (22, 24, 64, 66, 68, 70) associée : partie de couplage de machine-outil (12), partie de serrage d'outil (14) ou partie intermédiaire (10, 62), soient raccordées après l'application de la force d'assemblage axiale (F) par liaison de force pour la formation du porte-outil (10).

8. Porte-outil selon l'une des revendications précédentes,
**caractérisé en ce qu'**au moins l'une des surfaces d'appui (22, 24, 64, 66, 68, 70) et la contre-surface d'appui (22, 24, 64, 66, 68, 70) associée à celle-ci sont réalisées en se rétrécissant au moins par sections dans la direction axiale (W), de préférence en se rétrécissant de manière conique.

9. Porte-outil selon l'une des revendications précédentes,
**caractérisé en ce que** l'une des surfaces : surface d'appui (22, 24, 64, 66, 68, 70) et contre-surface d'appui (22, 24, 64, 66, 68, 70) associée, entoure l'autre, dans lequel, sur la base d'une position axiale dans une section axiale (34) commune des deux surfaces au niveau du porte-outil (10) monté, une dimension extérieure orthogonale à l'axe de porte-outil (S) de la surface entourée (24, 64, 68) à l'état non monté présente une surmesure par rapport à une dimension intérieure orthogonale à l'axe de porte-outil (S) de la surface qui entoure (22, 66, 70).

10. Porte-outil selon la revendication 9,
**caractérisé en ce qu'**au moins une surface d'appui (22g, 24g, 64g, 66g, 68g, 70g ; 22h, 24h, 64h, 66h, 68h, 70h ; 22i, 24i, 64i, 66i, 68i, 70i) et la contre-surface d'appui (22g, 24g, 64g, 66g, 68g, 70g ; 22h, 24h, 64h, 66h, 68h, 70h ; 22i, 24i, 64i, 66i, 68i, 70i) associée à celle-ci sont au moins par sections des surfaces sensiblement cylindriques, dans lequel l'axe de porte-outil (S) est sensiblement l'axe cylindrique commun des deux surfaces.

11. Porte-outil selon l'une des revendications précédentes,
**caractérisé en ce qu'**au moins deux, de préférence toutes, les parties radialement ou/et axialement adjacentes (12, 14, 60, 62) du porte-outil (10) sont raccordées avec un ajustement serré dans la surface de contact (36, 72, 74) se trouvant entre elles.

12. Porte-outil selon l'une des revendications précédentes,
**caractérisé en ce que** des moyens anti-détachement (38, 90) sont prévus, lesquels empêchent, par exemple par liaison de forme ou/et de matière, un détachement des parties radialement ou/et axialement adjacentes (12, 14, 60, 62) du porte-outil (10) l'une de l'autre.

13. Porte-outil selon l'une des revendications précédentes,
**caractérisé en ce qu'**au moins deux, de préférence toutes, les parties radialement ou/et axialement adjacentes (12, 14, 60, 62) du porte-outil (10) présentent des moyens de butée axiale (30, 32, 76, 78, 80, 82), lesquels limitent une course d'assemblage axiale des parties radialement ou/et axialement adjacentes (12, 14, 60, 62).

14. Porte-outil selon la revendication 13,
**caractérisé en ce que** les moyens de butée axiale (30, 32, 76, 78, 80, 82) comprennent une surface de butée (30, 78, 82) tournant autour de l'axe de porte-outil (S) d'une première partie (14, 60, 62) et une contre-surface de butée (32, 76, 80) tournant autour de l'axe de porte-outil (S) d'une seconde partie (12, 60, 62) axialement adjacente à la première partie (14, 60, 62) du porte-outil (10).

15. Porte-outil selon l'une des revendications précédentes, en tenant compte de l'une des revendications 4 à 6,
**caractérisé en ce qu'**au moins une partie intermédiaire (60d, 62d) est composée d'un autre matériau que la partie de couplage de machine-outil (12d) ou la partie de serrage d'outil (14d).

16. Porte-outil selon l'une des revendications précédentes, en tenant compte de la revendication 5 ou 6,
**caractérisé en ce qu'**au moins deux, de préférence toutes, les parties intermédiaires (60d, 62d) sont respectivement composées d'un autre matériau.

17. Porte-outil selon l'une des revendications précédentes, en tenant compte de la revendication 8,
**caractérisé en ce qu'**au moins deux surfaces de contact (36c, 72c, 74c) formées à distance radiale ou/et axiale l'une de l'autre sont réalisées en se rétrécissant au moins par sections dans la direction axiale, dans lequel les sections de rétrécissement des surfaces de contact (36c, 72c, 74c) présentent des angles de rétrécissement différents.

18. Porte-outil selon la revendication 17,
**caractérisé en ce que** l'angle de rétrécissement de surfaces de contact (36c, 72c, 74c) formées à distance radiale ou/et axiale l'une de l'autre augmente de la partie de serrage d'outil à la partie de couplage de machine-outil.

19. Porte-outil selon l'une des revendications précédentes, en tenant compte de l'une des revendications 4 à 6,
**caractérisé en ce qu'**au moins deux surfaces d'appui (22, 24, 64, 66, 68, 70) prévues à distance radiale ou/et axiale l'une de l'autre ou/et leurs contre-surfaces d'appui (22, 24, 64, 66, 68, 70) associées présentent des rugosités de surface différentes.

20. Porte-outil selon l'une des revendications précédentes,
**caractérisé en ce qu'**au moins une surface d'appui (22, 24, 64, 66, 68, 70) ou/et une contre-surface d'appui (22, 24, 64, 66, 68, 70) est pourvue d'un revêtement de surface.

21. Porte-outil selon l'une des revendications précédentes,
**caractérisé en ce que**, entre au moins une surface d'appui (22, 24, 64, 66, 68, 70) et une contre-surface d'appui (22, 24, 64, 66, 68, 70) associée à celle-ci, est prévue une couche intermédiaire (84).

22. Porte-outil selon l'une des revendications précédentes, en tenant compte de la revendication 8,
**caractérisé en ce qu'**une pluralité de parties intermédiaires (60i, 62i), de préférence toutes les parties intermédiaires (60i, 62i), sont raccordées de manière sensiblement rigide les unes aux autres en un ensemble de parties intermédiaires (88), de préférence au niveau d'au moins une extrémité longitudinale, de manière particulièrement préférée au niveau des deux extrémités longitudinales.
